# EUROPEAN PATENT APPLICATION

(11) **EP 2 998 559 A1**
(43) Date of publication of application: **23.03.2016**
(21) Application number: 15188921.9
(22) Date of filing: 15.08.2013
(51) Int. Cl.: F02M 21/02, F02M 61/18, F02M 61/12, F02M 47/04, F02M 63/00

(54) **FUEL GAS INJECTION VALVE, DUAL FUEL GAS ENGINE, AND METHOD FOR INJECTING FUEL GAS**

(30) Priority: 19.10.2012 JP 2012232065
(62) Divisional of application: 13847809.4
(71) Applicant: MITSUBISHI HEAVY INDUSTRIES, LTD., Tokyo 108-8215 (JP)
(72) Inventor: Ishida, Hiroyuki, Tokyo 108-8215 (JP); Miyanagi, Akihiro, Tokyo 108-8215 (JP); Hiraoka, Naohiro, Tokyo 108-8215 (JP); Tanaka, Shigeki, Tokyo 108-8215 (JP); Watanabe, Sota, Tokyo 108-8215 (JP); Komada, Yasuyuki, Tokyo 108-8215 (JP)
(74) Representative: Hoffmann Eitle

(57) **Abstract**

A fuel gas injection valve according to the present invention includes: a holder (22) including a first injection hole (61) through which fuel gas is injected to produce premixed fuel, and a second injection hole (62) through which fuel gas is injected to produce diffusion fuel; a first needle valve (23) that slidably reciprocates in the holder (22) along an axial direction to open and close the first injection hole (61) and the second injection hole (62); and a second needle valve (25) having a sealing face (94) on the top thereof and a through-hole (91) provided along the axial direction at the central portion in a radial direction of the second needle valve (25), the sealing face being brought into contact with a needle valve seat (93) provided in the holder (22), the first needle valve (23) being slidably inserted into the through-hole, and the second needle valve (25) reciprocating in the holder (22) along the axial direction to prevent fuel gas from circulating to the first injection hole (61) and the second injection hole (62) when the sealing face (94) is in contact with the needle valve seat (93), and to allow the fuel gas to circulate to the first injection hole (61) or the second injection hole (62) when the sealing face (94) is separated from the needle valve seat (93).

## Description

### {Technical Field}

The present invention relates to a fuel gas injection valve, a dual fuel gas engine, and a method for injecting fuel gas, applicable to a (dual fuel two-stroke) gas engine capable of burning both fuel oil and fuel gas by using high-pressure injection.

### {Background Art}

Conventionally, there is publicly known a gas engine in which fuel gas such as natural gas is used as main fuel, and fuel oil such as light oil having high compression ignitability is used as pilot fuel, in order that the fuel oil such as light oil is injected into a combustion chamber in a high temperature atmosphere to be burned by self-ignition to burn the fuel gas serving as the main fuel.

For example, Patent Literature 1 discloses a dual fuel diesel engine in which low cetane number fuel having low compression ignitability, such as fuel gas is used as main fuel, and fuel oil having high compression ignitability is used as pilot fuel. The engine disclosed in Patent Literature 1 includes a fuel gas injection valve and a pilot fuel injection valve, provided in a cylinder head, and is configured to inject the fuel gas and the pilot fuel into a combustion chamber through the fuel gas injection valve and the pilot fuel injection valve so that the pilot fuel (fuel oil) is burned in the combustion chamber at high temperature by self-ignition to burn the main fuel (fuel gas).

In addition, for example, Patent Literature 2 discloses a gas engine in which fuel gas having low compression ignitability is used as main fuel, and diesel fuel such as light oil and kerosene, having high compression ignitability, is used as pilot fuel. The gas engine disclosed in Patent Literature 2 includes an intake port and a diesel fuel injection device, provided in a cylinder head, and a fuel gas injection device provided in a cylinder circumferential wall. During an intake stroke in which a piston falls, air is introduced into a combustion chamber from the intake port, and the fuel gas injection device is configured to inject the fuel gas into the combustion chamber at proper timing between a later stage of the intake stroke and a later stage of a compression stroke. In addition, the diesel fuel injection device is configured to inject the diesel fuel into the combustion chamber at a time when the piston rises close to top dead center to allow the diesel fuel to burn in the combustion chamber by self-ignition, thereby burning the fuel gas serving as the main fuel.

### {Citation List}

### {Patent Literature}

{PTL 1}
   Japanese Unexamined Utility Model Application, Publication No. Sho 62-45339
{PTL 2}
   Japanese Unexamined Patent Application, Publication No. Hei 6-137150

### {Summary of Invention}

### {Technical Problem}

In the engine above described in PTL 1, since the main fuel and the pilot fuel are supplied into the combustion chamber almost at the same time when the piston is close to the top dead center, the main fuel injected into the combustion chamber is immediately burned without agitation. Thus, a combustion form of the main fuel is diffusion combustion. In the case of the diffusion combustion, uniform combustion is difficult as compared with premixed combustion, so that there is a problem in which NOx (nitrogen oxide) tends to easily occur in a combustion zone at high temperature.

In addition, the gas engine above described in PTL 2 is the invention made for increasing the amount of air to be sucked in the combustion chamber. That is, the invention described in PTL 2 is configured to suck only air from an intake port and to be separately provided with a fuel gas injection device while conventionally, a gaseous mixture of fuel gas and air is introduced from an intake port. The fuel gas injection device injects fuel gas into the combustion chamber by shifting the timing of injection with respect to an intake stroke to increase the amount of air to be sucked in the combustion chamber from the intake port, thereby improving engine output.

In PTL 2, there is disclosed no technical idea of reducing occurrence of NOx (nitrogen oxide) by promoting premixing.

The present invention is made in light of the problem of the conventional art as described above, and an object of the present invention is to provide a fuel gas injection valve, a dual fuel gas engine, and a method for injecting fuel gas, capable of reducing occurrence of NOx (nitrogen oxide) by promoting premixing of fuel gas and air.

### {Solution to Problem}

A fuel gas injection valve in accordance with the present invention is applicable to a dual fuel gas engine capable of burning both fuel oil and fuel gas by using high-pressure injection, and the fuel gas injection valve includes: a holder including a first injection hole through which fuel gas is injected to produce premixed fuel when a piston included in the dual fuel gas engine is positioned between 40° and 100° before top dead center, and a second injection hole through which fuel gas is injected to produce diffusion fuel when the piston is positioned about 5° before the top dead center; a first needle valve that slidably reciprocates along an axial direction in the holder to close the second injection hole when the first injection hole is opened, and to open the second injection hole when the first injection hole is closed; and a second needle valve having a sealing face on the top thereof and a through-hole provided along the axial direction at the central portion in a radial direction of the second needle valve, the sealing face being brought into contact with a needle valve seat provided in the holder, the first needle valve being slidably inserted into the through-hole, and the second needle valve reciprocating in the holder along the axial direction to prevent fuel gas from circulating to the first injection hole and the second injection hole when the sealing face is in contact with the needle valve seat, and to allow the fuel gas to circulate to the first injection hole or the second injection hole when the sealing face is separated from the needle valve seat.

In addition, a method for injecting fuel gas in accordance with the present invention is applicable to a dual fuel gas engine capable of burning both fuel oil and fuel gas by using high-pressure injection, and the method includes the steps of: injecting fuel gas to produce premixed fuel when the piston included in the dual fuel gas engine is positioned between 40° and 100° before top dead center,; and injecting fuel gas to produce diffusion fuel when the piston is positioned about 5° before the top dead center.

In accordance with the fuel gas injection valve and the method for injecting fuel gas according to the present invention, it is possible to promote premixing of fuel gas and air so that occurrence of NOx (nitrogen oxide) can be reduced.

In the fuel gas injection valve described above, it is further preferable that the first needle valve serves as a slide valve that is reciprocated in the holder along the axial direction by pressure inside cylinder of the dual fuel gas engine.

In accordance with the fuel gas injection valve, only applying the pressure inside cylinder to the first needle valve (slide valve) allows the first needle valve (slide valve) to move to a side opposite to the inside of the cylinder.

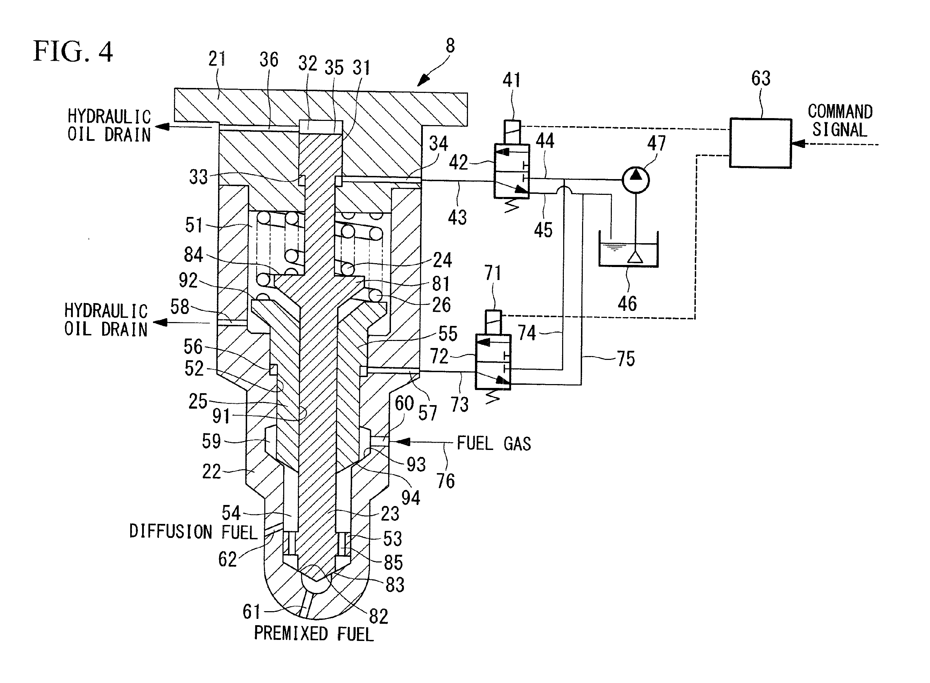

Accordingly, it is possible to remove components for moving the first needle valve (slide valve) to the side opposite to the inside of the cylinder, such as a first electromagnetic valve 41, a first flow channel switching valve 42, and a first hydraulic oil pipe 43, shown in Fig. 4, so that a configuration can be simplified.

In the fuel gas injection valve described above, it is further preferable that the nozzle includes oil reservoirs provided in a portion in which the second needle valve slides and in the through-hole, respectively, and the oil reservoir provided in the portion in which the second needle valve slides and the oil reservoir provided in the through-hole communicate with each other through a communication hole provided in the nozzle along a radial direction thereof.

In accordance with the fuel gas injection valve, it is possible to apply lubricant to a sliding portion so that abrasion and fastening of the sliding portion can be prevented.

The fuel gas injection valve in accordance with the present invention is applicable to a dual fuel gas engine capable of burning both fuel oil and fuel gas by using high-pressure injection, and the fuel gas injection valve includes: a holder including a first injection hole through which fuel gas is injected to produce premixed fuel when a piston included in the dual fuel gas engine is positioned between 40° and 100° before the top dead center, and a second injection hole through which fuel gas is injected to produce diffusion fuel when the piston is positioned between 10° before the top dead center and 15° after the top dead center; a first needle valve that slidably reciprocates along an axial direction in the holder to close the second injection hole when the first injection hole is opened, and to open the second injection hole when the first injection hole is closed; and a second needle valve having a sealing face on the top thereof, the sealing face being brought into contact with a needle valve seat provided in the holder, and the second needle valve reciprocating in the holder along the axial direction to prevent fuel gas from circulating to the first injection hole and the second injection hole when the sealing face is in contact with the needle valve seat, and to allow the fuel gas to circulate to the first injection hole or the second injection hole when the sealing face is separated from the needle valve seat.

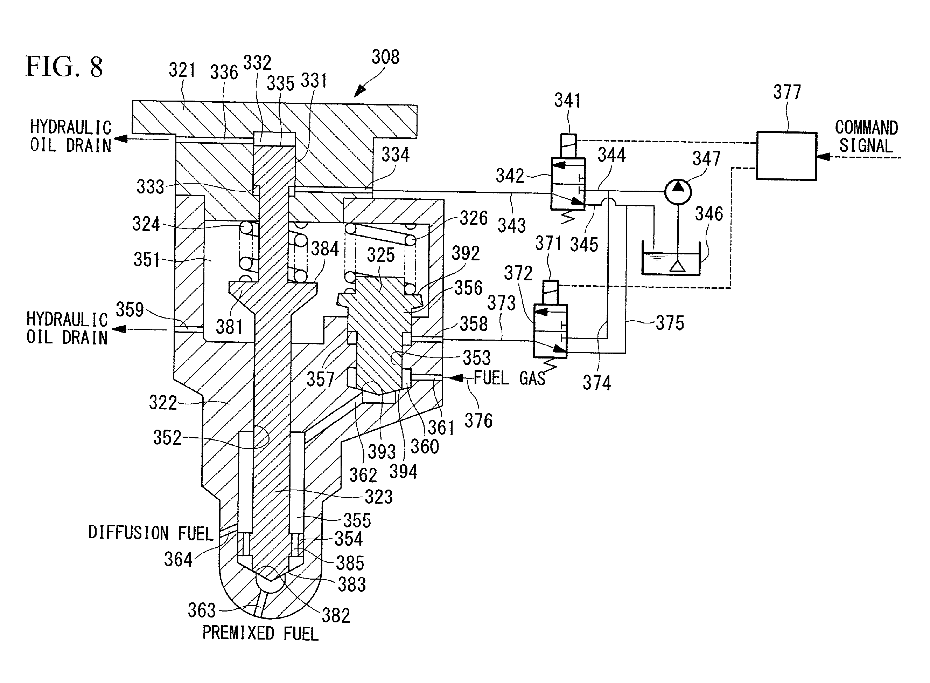

In accordance with the fuel gas injection valve, it is possible to promote premixing of fuel gas and air so that occurrence of NOx (nitrogen oxide) can be reduced. In addition, in accordance with the fuel gas injection valve, as shown in Fig. 8, for example, the first needle valve and the second needle valve are not required to be formed concentrically with each other. As a result, manufacturing processes can be simplified, so that manufacturing cost can be reduced.

In the fuel gas injection valve described above, it is further preferable that the nozzle includes oil reservoirs provided in a portion in which the first needle valve slides and a portion in which the second needle valve slides, respectively.

In accordance with the fuel gas injection valve, it is possible to apply lubricant to a sliding portion so that abrasion and fastening of the sliding portion can be prevented.

The dual fuel gas engine according to the present invention includes any one of the fuel gas injection valves described above.

In accordance with a dual fuel gas engine according to the present invention, the dual fuel gas engine includes a fuel gas injection valve capable of promoting premixing of fuel gas and air to reduce occurrence of NOx (nitrogen oxide). As a result, it is possible to reduce NOx (nitrogen oxide) discharged from the dual fuel gas engine so that performance of the dual fuel gas engine can be improved.

### {Advantageous Effects of Invention}

In accordance with the fuel gas injection valve, there is achieved an effect in which premixing of fuel gas and air can be promoted so that occurrence of NOx (nitrogen oxide) can be reduced.

### {Brief Description of Drawings}

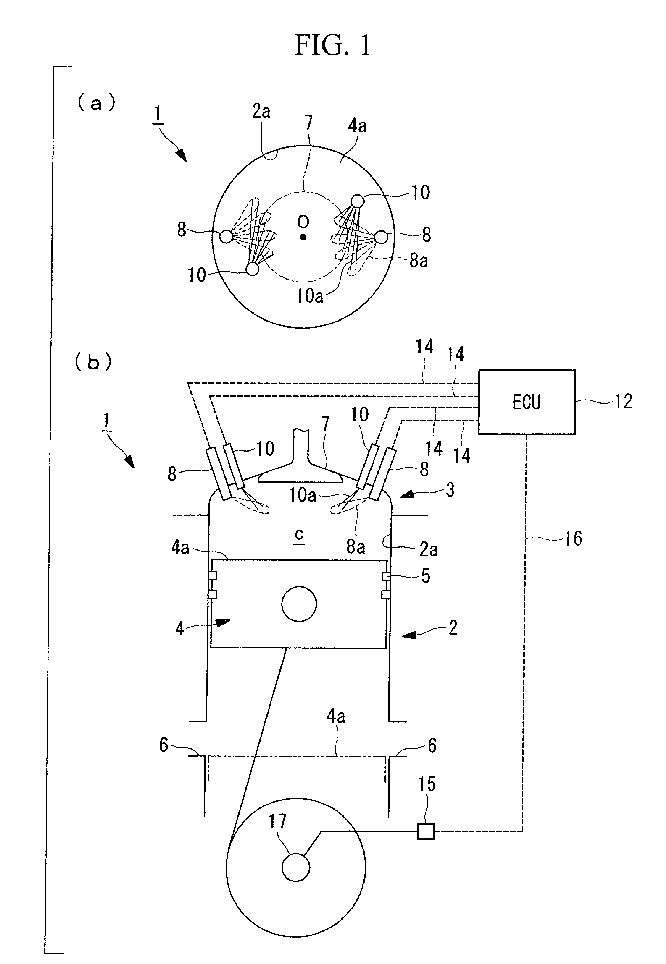

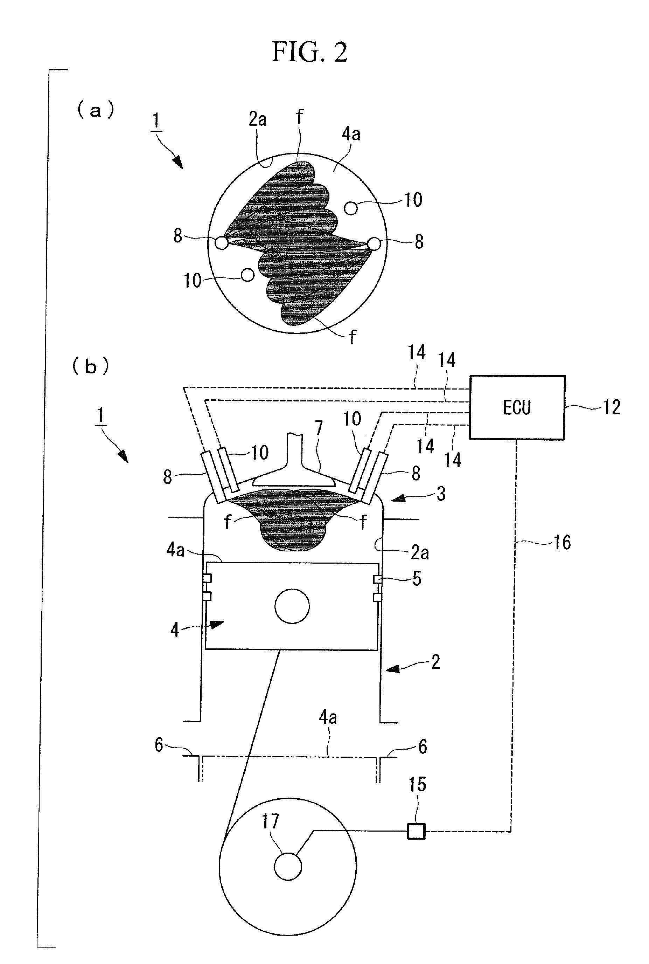

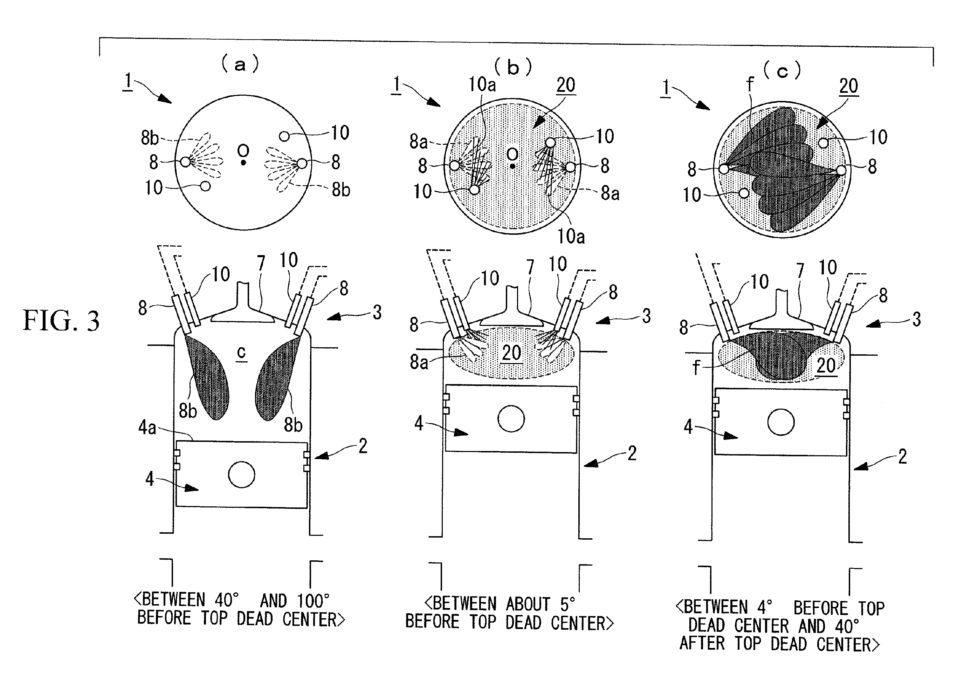

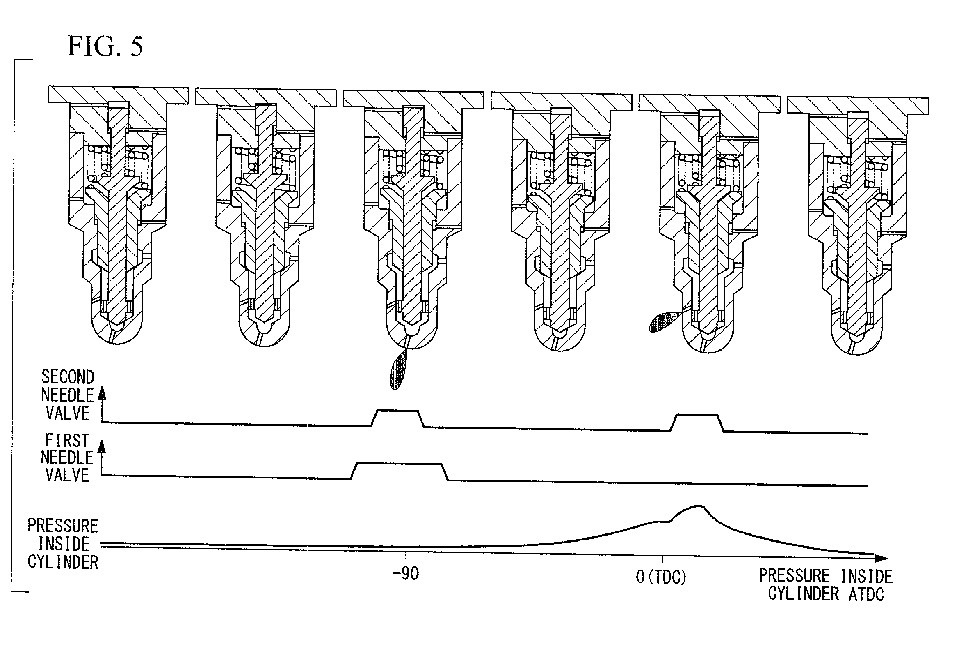

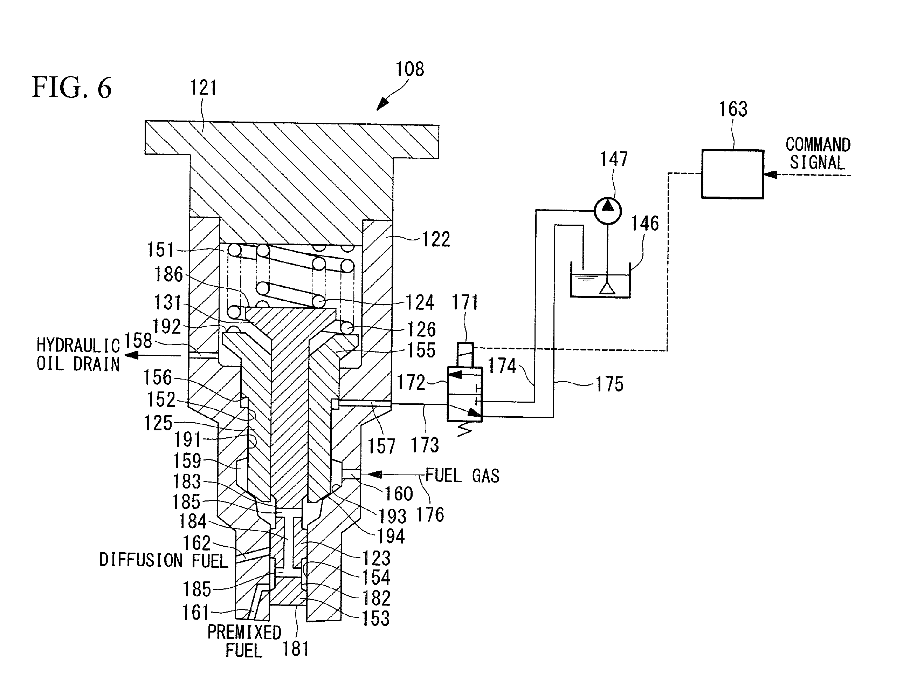

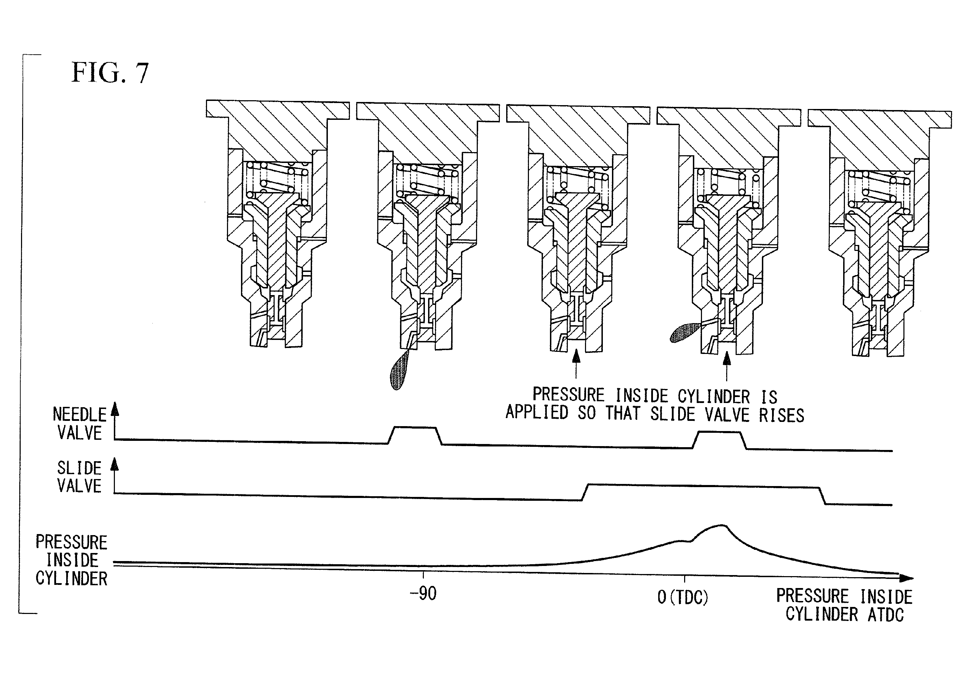

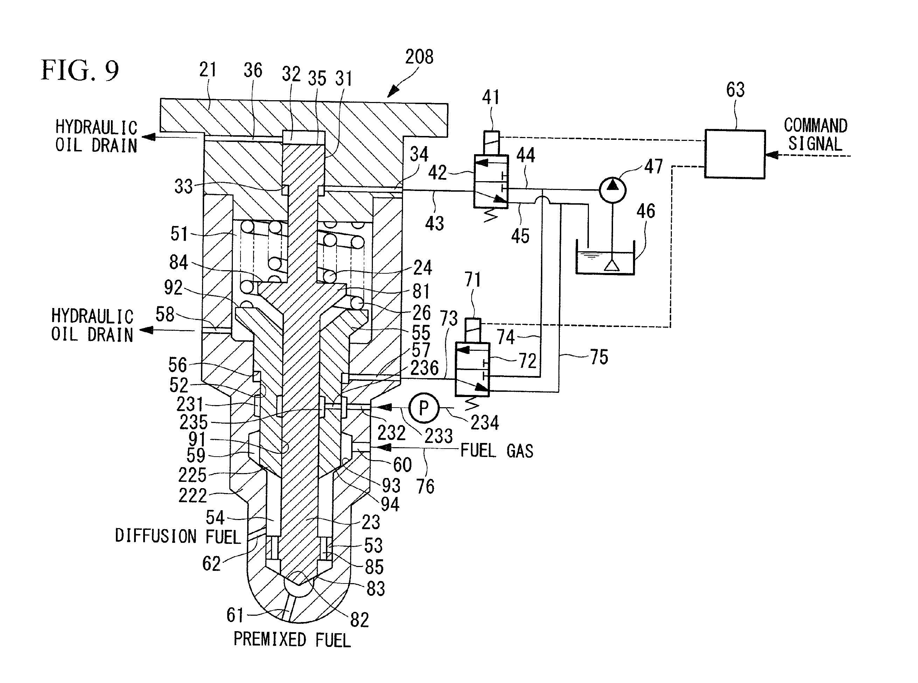

{Fig. 1}
   Fig. 1 is a schematic view for describing a basic configuration of a (dual fuel two-stroke) gas engine to which a fuel gas injection valve according to the present invention is applied. Fig. 1(a) is a top view showing a piston that is positioned about 5° before top dead center, and Fig. 1(b) is a sectional view showing the piston that is positioned about 5° before the top dead center.
{Fig. 2}
   Fig. 2 is a schematic view for describing a basic configuration of a gas engine to which a fuel gas injection valve according to the present invention is applied. Fig. 2(a) is a top view showing a piston that is positioned between 4° before the top dead center and 40° after the top dead center, and Fig. 2(b) is a sectional view showing the piston that is positioned between 4° before the top dead center and 40° after the top dead center.
{Fig. 3}
   Fig. 3 is a schematic view for describing a basic configuration of a gas engine to which a fuel gas injection valve according to the present invention is applied. Fig. 3(a) is top and sectional views showing a piston that is positioned between 40° and 100° before the top dead center, Fig. 3(b) is top and sectional views showing the piston that is positioned about 5° before the top dead center, and Fig. 3(c) is top and sectional views showing the piston that is positioned between 4° before the top dead center and 40° after the top dead center.
{Fig. 4}
   Fig. 4 shows a section and a hydraulic system of a fuel gas injection valve according to a first embodiment of the present invention.
{Fig. 5}
   Fig. 5 includes an upper half that shows operation of the fuel gas injection valve according to the first embodiment of the present invention, and a lower half that includes graphs showing a relationship among opening/closing of the first needle valve, opening/closing of the second needle valve, pressure inside the cylinder, and a crank angle.
{Fig. 6}
   Fig. 6 shows a section and a hydraulic system of a fuel gas injection valve according to a second embodiment of the present invention.
{Fig. 7}
   Fig. 7 includes an upper half that shows operation of the fuel gas injection valve according to the second embodiment of the present invention, and a lower half that includes graphs showing a relationship among opening/closing of a needle valve, opening/closing of a slide valve, pressure inside the cylinder, and a crank angle.
{Fig. 8}
   Fig. 8 shows a section and a hydraulic system of a fuel gas injection valve according to a third embodiment of the present invention.
{Fig. 9}
   Fig. 9 shows a section and a hydraulic system of a fuel gas injection valve according to a fourth embodiment of the present invention.

### {Description of Embodiments}

### (First embodiment)

Hereinafter, the first embodiment of the fuel gas injection valve according to the present invention will be described with reference to Figs. 1 to 5.

The scope of the present invention, however, is not limited to the embodiments below. Although there are described size, material, shape, relative arrangement, and the like of components in the embodiments below, the scope of the present invention does not intend to be limited to them, but they are only examples unless otherwise specified.

Fig. 1 is a schematic view for describing a basic configuration of a (dual fuel two-stroke) gas engine to which a fuel gas injection valve according to the present invention is applied. Fig. 1 (a) is a top view showing a piston that is positioned about 5° before top dead center, and Fig. 1 (b) is a sectional view showing the piston that is positioned about 5° before the top dead center. Fig. 2 is a schematic view for describing a basic configuration of a gas engine to which a fuel gas injection valve according to the present invention is applied. Fig. 2(a) is a top view showing a piston that is positioned between 4° before the top dead center and 40° after the top dead center, and Fig. 2(b) is a sectional view showing the piston that is positioned between 4° before the top dead center and 40° after the top dead center. Fig. 3 is a schematic view for describing a basic configuration of a gas engine to which a fuel gas injection valve according to the present invention is applied. Fig. 3(a) is top and sectional views showing a piston that is positioned between 40° and 100° before the top dead center, Fig. 3(b) is top and sectional views showing the piston that is positioned about 5° before the top dead center, and Fig. 3(c) is top and sectional views showing the piston that is positioned between 4° before the top dead center and 40° after the top dead center. Fig. 4 shows a section and a hydraulic system of a fuel gas injection valve according to a first embodiment of the present invention. Fig. 5 includes an upper half that shows operation of the fuel gas injection valve according to the first embodiment of the present invention, and a lower half that includes graphs showing a relationship among opening/closing of the first needle valve, opening/closing of the second needle valve, pressure inside the cylinder, and a crank angle.

As shown in Figs. 1 to 3, a gas engine 1 to which the fuel gas injection valve according to the present invention is applied includes a cylindrical cylinder 2, a cylinder head 3 joined to an upper end of the cylinder 2, and a piston 4 accommodated inside the cylinder 2 so as to be movable back and forth. In addition, a combustion chamber "c" is defined by a circumferential wall 2a of the cylinder 2, the cylinder head 3, and a top face 4a of the piston 4.

In the drawings, a reference numeral 5 indicates a piston ring.

There is opened a scavenging port 6 in the circumferential wall 2a on a lower side of the cylinder 2. The scavenging port 6 is formed at a position above the top face 4a (indicated by a dash-dot-dot line in the drawing) of the piston 4 positioned close to bottom dead center. When the piston 4 is positioned close to the bottom dead center, air is supplied to the combustion chamber "c" from the scavenging port 6. In addition, in a top of the cylinder head 3, an exhaust port is opened and an exhaust valve 7 for opening and closing the exhaust port is provided. The exhaust valve 7 is opened until the piston 4 reaches a position about 100° before top dead center during a scavenging stroke in which the piston 4 is in a rising stroke. Then, the air supplied to the combustion chamber "c" from the scavenging port 6 scavenges exhaust gas of the previous stroke, staying in the combustion chamber "c".

The cylinder head 3 is provided with a fuel gas injection valve (fuel gas injection device) 8 for injecting fuel gas 8a into the combustion chamber "c", as well as with a fuel oil injection valve (fuel oil injection device) 10 for injecting fuel oil 10a having high compression ignitability into the combustion chamber "c". The fuel gas injection valve 8 and the fuel oil injection valve 10 are provided one by one, 180° apart in a circumferential direction in which the center "o" of the cylinder center serves as the center of rotation.

In the present embodiment, each of the fuel gas injection valve 8 and the fuel oil injection valve 10 is provided with four injection holes. In the present invention, installed number of the fuel gas injection valve 8 and the fuel oil injection valve 10, described above, is not limited, so that the installed number may be one, for example. However, in the present embodiment in which the exhaust valve 7 is provided at the top of the cylinder head 3, it is preferable that each of a plurality of fuel gas injection valves 8 and fuel oil injection valves 10 is arranged in the circumferential direction at equal intervals.

As shown in Figs. 1 and 2, the fuel gas injection valve 8 and the fuel oil injection valve 10 are connected to an engine control unit (ECU) 12 through a cable 14. The ECU 12 is connected to a crank angle sensor 15 for detecting a rotation angle of a crankshaft 17 through a cable 16, and receives a signal on the rotation angle of the crankshaft 17 from the crank angle sensor 15 to detect a phase of the piston 4. In addition, the fuel gas injection valve 8 and the fuel oil injection valve 10 inject the fuel gas 8a and the fuel oil 10a into the combustion chamber "c", respectively, at predetermined timing on the basis of the signal transmitted from the ECU 12.

That is, the ECU 12 constitutes a fuel gas injection timing control means in the present embodiment, as well as constitutes an ignition timing control means in the present embodiment which allows the fuel oil injection valve 10 to ignite fuel gas in the combustion chamber "c" when the piston 4 is positioned between 4° before the top dead center and 40° after the top dead center.

In addition, as shown in Fig. 3(a), when the piston 4 is in a rising stoke, and is positioned between 40° and 100° before the top dead center, the fuel gas injection valve 8 injects the fuel gas 8b into the combustion chamber "c" on the basis of a signal transmitted from the ECU 12 (fuel gas injection timing control means). As above, when the fuel gas 8b is injected into the combustion chamber "c" while the piston 4 is positioned between 40° and 100° before the top dead center, the fuel gas 8b injected and air inside the combustion chamber "c" are mixed in a process in which the piston 4 further rises close to the top dead center, thereby promoting premixing.

Next, as shown in Figs. 1 and 3(b), when the piston 4 reaches about 5° before the top dead center, the fuel gas injection valve 8 injects the fuel gas 8a, as well as the fuel oil injection valve 10 injects the fuel oil 10a, on the basis of a signal transmitted from the ECU 12 (fuel gas injection timing control means and ignition timing control means), so that the fuel oil 10a having high compression ignitability is burned by self-ignition in the combustion chamber "c" in a high temperature atmosphere. As a result, the fuel gas 8a injected is burned almost at the same time, so that combustion flame "f" is produced inside the combustion chamber "c" as shown in Figs. 2 and 3(c), and then the combustion flame "f" is propagated to the gaseous mixture 20 described above to cause occurrence of explosive combustion in the whole of the combustion chamber "c".

As above, the gas engine 1 according to the present embodiment is configured to inject the fuel gas 8b when the piston 4 is positioned between 40° and 100° before the top dead center, and to inject the fuel gas 8a and the fuel oil 10a when the piston 4 is positioned about 5° before the top dead center. Thus, premixing of the fuel gas 8b injected when the piston 4 is positioned between 40° and 100° before the top dead center, and air, is promoted, so that the gaseous mixture 20 is produced to cause a part of combustion form to be premixed combustion. As a result, occurrence of NOx (nitrogen oxide) can be reduced as compared with a conventional gas engine in which the whole of combustion form is diffusion combustion.

In addition, the gas engine 1 according to the present embodiment is configured to control injection timing of the fuel gas injection valve 8 by using only the fuel gas injection timing control means composed of the ECU 12. Thus, it is possible to easily promote premixing in an existing gas engine without requiring a new additional device and the like.

As shown in Fig. 4, the fuel gas injection valve 8 according to the present embodiment includes a nozzle holder 21, a nozzle 22, a first needle valve 23, a first needle valve pressing spring 24, a second needle valve 25, and a second needle valve pressing spring 26.

The nozzle holder 21 includes: a recessed portion 32 for slidably accommodating a first enlarged diameter portion 31 provided at one end (apex) of the first needle valve 23 that extends along an axial direction (a vertical direction in Fig. 4), and that reciprocates along the axial direction; a first communication hole 34 that extends in a radial direction (a lateral direction in Fig. 4) to introduce hydraulic oil that moves the first needle valve 23 in an opening direction (an upper direction in Fig. 4) to a lower face (bottom face) 33 of the first enlarged diameter portion 31, the lower face being a pressure receiving face; and a second communication hole 36 that extends along the radial direction to introduce hydraulic oil pushed out by an upper face (top face) 35 of the first enlarged diameter portion 31 when the first needle valve 23 is moved in the opening direction, to the outside of the nozzle holder 21.

The hydraulic oil pushed out by the upper face 35 of the first enlarged diameter portion 31 is leaked through a sliding portion, namely a clearance between an outer peripheral face of the first enlarged diameter portion 31 and an inner peripheral face of the recessed portion 32.

The first communication hole 34 is connected to the first flow channel switching valve 42 in which a flow channel is switched by the first electromagnetic valve 41, through the first hydraulic oil pipe 43. The first flow channel switching valve 42 is connected to a downstream end of a first hydraulic oil supply pipe 44, and an upstream end of a first hydraulic oil return pipe 45. The upstream end of the first hydraulic oil supply pipe 44 is arranged so as to be positioned inside a hydraulic oil tank 46 as well as close to a bottom face of the hydraulic oil tank 46, and a hydraulic oil pump 47 is connected to the middle of the first hydraulic oil supply pipe 44. The downstream end of the first hydraulic oil return pipe 45 is arranged so that hydraulic oil returned through the first hydraulic oil pipe 43 and the first hydraulic oil return pipe 45 is recovered inside the hydraulic oil tank 46.

The nozzle 22 includes: a first recessed portion 51 that extends in the axial direction, and that accommodates the first needle valve pressing spring 24 and the second needle valve pressing spring 26; a second recessed portion 52 that extends in the axial direction, and that slidably accommodates the second needle valve 25 that reciprocates along the axial direction; a third recessed portion 54 that slidably accommodates a second enlarged diameter portion 53 provided at the other end portion (tip portion) of the first needle valve 23 that reciprocates along the axial direction; a first communication hole 57 that extends in the radial direction to introduce hydraulic oil for moving the second needle valve 25 in the opening direction (upper direction in Fig. 4) to a lower face (bottom face) 56 of an enlarged diameter portion 55 of the second needle valve 25, the lower face being a pressure receiving face; a second communication hole 58 that extends in the radial direction to introduce hydraulic oil pushed out by rising of the enlarged diameter portion 55 when the second needle valve 25 is moved in the opening direction, to the outside of the nozzle 22; a third communication hole 60 that extends in the radial direction to introduce fuel gas into a chamber (annular space) 59 provided in a portion between the second recessed portion 52 and the third recessed portion 54; a first injection hole 61 that introduces the fuel gas introduced into the chamber 59 and the third recessed portion 54, into the combustion chamber "c" (refer to Fig. 1, etc.), at the time of injecting premixed fuel; and a second injection hole 62 that introduces the fuel gas introduced into the chamber 59 and the third recessed portion 54, into the combustion chamber "c", at the time of injecting diffusion fuel.

The first communication hole 57 is connected to a second flow channel switching valve 72 in which a flow channel is switched by a second electromagnetic valve 71, through a second hydraulic oil pipe 73. The second flow channel switching valve 72 is connected to a downstream end of a second hydraulic oil supply pipe 74, and an upstream end of a second hydraulic oil return pipe 75. The upstream end of the second hydraulic oil supply pipe 74 is connected to the middle of the first hydraulic oil supply pipe 44 positioned downstream the hydraulic oil pump 47, and the downstream end of the second hydraulic oil return pipe 75 is connected to the middle of the first hydraulic oil return pipe 45.

The third communication hole 60 is connected to a downstream end a fuel gas supply pipe 76 whose upstream end is connected to a fuel gas supply source (not shown).

The engine control unit 12 (refer to Fig. 1, etc.) transmits a command signal for energizing the first electromagnetic valve 41 and the second electromagnetic valve 71, and a command signal for nonenergizing the first electromagnetic valve 41 and the second electromagnetic valve 71, to an energization device 63. The first electromagnetic valve 41 and the second electromagnetic valve 71 are energized or nonenergized on the basis of the command signals.

The first needle valve 23 includes the first enlarged diameter portion 31 at one end portion thereof in the axial direction, the second enlarged diameter portion 53 at the other end portion thereof in the axial direction, and a third enlarged diameter portion 81 on a side of the one end from the center thereof in the axial direction. The first needle valve is a solid cylindrical member, and is provided at its other end (tip) with a sealing face (seat face) 83 that is to be brought into contact with a first needle valve seat 82. In addition, a top face of the third enlarged diameter portion 81 serves as a spring receiving face 84 that is brought into contact with a lower end of the first needle valve pressing spring 24. The second enlarged diameter portion 53 is provided with a plurality of through-holes that penetrates through the second enlarged diameter portion 53 along the axial direction, that is, there is provided along the circumferential direction a plurality of communication holes 85 each of which allows top and lower faces of the second enlarged diameter portion 53 to communicate with each other.

The first needle valve pressing spring 24 urges the first needle valve 23 in a closing direction (urges so that the first needle valve seat 82 and the sealing face 83 are brought into contact with each other). Thus, in a state where the first hydraulic oil pipe 43 and the first hydraulic oil return pipe 45 communicate with each other, that is, in a state where hydraulic pressure of hydraulic oil is not applied to the lower face 33 of the first enlarged diameter portion 31, the first needle valve 23 is urged in the closing direction.

The second needle valve 25 is a hollow cylindrical member in which there is provided along the axial direction a through-hole 91 through which the first needle valve 23 is slidably inserted, in its central portion in the radial direction. The second needle valve 25 includes a top face (apex face) serving as a spring receiving face 92 that is brought into contact with the lower end of the second needle valve pressing spring 26, and a sealing face (seat face) 94 that is provided at the other end (tip) thereof, and that is brought into contact with the second needle valve seat 93.

The second needle valve pressing spring 26 urges the second needle valve 25 in a closing direction (urges so that the second needle valve seat 93 and the sealing face 94 are brought into contact with each other). Thus, in a state where the second hydraulic oil pipe 73 and the second hydraulic oil return pipe 75 communicate with each other, that is, in a state where hydraulic pressure of hydraulic oil is not applied to the lower face 56 of the enlarged diameter portion 55 of the second needle valve 25, the second needle valve 25 is urged in the closing direction.

Next, operation of the fuel gas injection valve 8 will be described with reference to Figs. 4 and 5.

First, as shown in Fig. 4 and the illustration at the first position from the left of the upper half of Fig. 5, in a state where the first hydraulic oil pipe 43 and the first hydraulic oil return pipe 45 communicate with each other, as well as the second hydraulic oil pipe 73 and the second hydraulic oil return pipe 75 communicate with each other, a lift of each of the first needle valve 23 and the second needle valve 25 becomes 0 (zero) to close both of the first needle valve 23 and the second needle valve 25.

Subsequently, the electromagnetic valve 41 shown in Fig. 4 is energized to switch a flow channel of the first flow channel switching valve 42 to allow the first hydraulic oil pipe 43 and the first hydraulic oil supply pipe 44 to communicate with each other. Then, hydraulic oil introduced through the first communication hole 34 is applied to the lower face 33 of the first enlarged diameter portion 31 to lift up the first needle valve 23 (moves in the opening direction) as shown in the illustration at the second position from the left of the upper half of Fig. 5. As a result, the outer peripheral face of the second enlarged diameter portion 53 closes the second injection hole 62.

Next, the electromagnetic valve 71 shown in Fig. 4 is energized to switch a flow channel of the second flow channel switching valve 72 to allow the second hydraulic oil pipe 73 and the second hydraulic oil supply pipe 74 to communicate with each other. Then, hydraulic oil introduced through the first communication hole 57 is applied to the lower face 56 of the enlarged diameter portion 55 of the second needle valve 25 to lift up the second needle valve 25 (moves in the opening direction) as shown in the illustration at the third position from the left of the upper half of Fig. 5. As a result, the fuel gas introduced into the chamber 59 through the third communication hole 60 is introduced into the first injection hole 61 through the communication hole 85 so as to be injected as premixed fuel from the first injection hole 61.

Subsequently, the electromagnetic valve 41 and the electromagnetic valve 71 shown in Fig. 4 are nonenergized, so that the flow channel of the first flow channel switching valve 42 and the flow channel of the second flow channel switching valve 72 are switched to allow the first hydraulic oil pipe 43 and the first hydraulic oil return pipe 45 to communicate with each other, as well as to allow the second hydraulic oil pipe 73 and the second hydraulic oil return pipe 75 to communicate with each other, as shown in Fig. 4 and the illustration at the fourth position from the left of the upper half of Fig. 5, that is, both the first needle valve 23 and the second needle valve 25 are closed.

Next, the electromagnetic valve 71 shown in Fig. 4 is energized to switch the flow channel of the second flow channel switching valve 72 to allow the second hydraulic oil pipe 73 and the second hydraulic oil supply pipe 74 to communicate with each other. Then, hydraulic oil introduced through the first communication hole 57 is applied to the lower face 56 of the enlarged diameter portion 55 of the second needle valve 25 to lift up the second needle valve 25 (moves in the opening direction) as shown in the illustration at the fifth position from the left of the upper half of Fig. 5. As a result, the fuel gas introduced into the chamber 59 through the third communication hole 60 is introduced into the second injection hole 62 so as to be injected as diffusion fuel from the second injection hole 62.

At this time, the electromagnetic valve 41 shown in Fig. 4 is not energized, so that a lift of the first needle valve 23 becomes 0 (zero) to close the first needle valve 23.

Subsequently, the electromagnetic valve 71 shown in Fig. 4 is nonenergized, so that the flow channel of the second flow channel switching valve 72 is switched to allow the second hydraulic oil pipe 73 and the second hydraulic oil return pipe 75 to communicate with each other, as shown in Fig. 4 and the illustration at the sixth position from the left of the upper half of Fig. 5, that is, both the first needle valve 23 and the second needle valve 25 are closed.

The graphs in the lower half of Fig. 5 show a relationship among opening/closing of the first needle valve 23, opening/closing of the second needle valve 25, pressure inside the cylinder, and a crank angle.

In addition, the illustration at the third position from the left of the upper half of Fig. 5 corresponds to Fig. 3(a), and the illustration at the fifth position from the left of the upper half of Fig. 5 corresponds to Figs. 1 and 3(b).

In accordance with the fuel gas injection valve 8 and the method for injecting fuel gas according to the present embodiment, it is possible to promote premixing of fuel gas and air so that occurrence of NOx (nitrogen oxide) can be reduced.

In accordance with the gas engine 1 provided with the fuel gas injection valve 8 according to the present embodiment, the gas engine includes the fuel gas injection valve 8 capable of promoting premixing of fuel gas and air to reduce occurrence of NOx (nitrogen oxide). As a result, it is possible to reduce NOx (nitrogen oxide) discharged from the gas engine 1 so that performance of the gas engine 1 can be improved.

### (Second embodiment)

Hereinafter, the second embodiment of the fuel gas injection valve according to the present invention will be described with reference to Figs. 6 and 7.

Fig. 6 shows a section and a hydraulic system of a fuel gas injection valve according to the second embodiment of the present invention. Fig. 7 includes an upper half that shows operation of the fuel gas injection valve according to the second embodiment of the present invention, and a lower half that includes graphs showing a relationship among opening/closing of a needle valve, opening/closing of a slide valve, pressure inside the cylinder, and a crank angle.

As shown in Fig. 6, the fuel gas injection valve 108 according to the present embodiment includes a nozzle holder 121, a nozzle 122, a slide valve 123, a slide valve pressing spring 124, a needle valve 125, and a needle valve pressing spring 126.

The nozzle 122 includes: a first recessed portion 151 that extends in the axial direction, and that accommodates the slide valve pressing spring 124 and the needle valve pressing spring 126; a second recessed portion 152 that extends in the axial direction, and that slidably accommodates the needle valve 125 that reciprocates along the axial direction; a third recessed portion 154 that slidably accommodates the other end portion (tip portion) 153 of the slide valve 123 that reciprocates along the axial direction; a first communication hole 157 that extends in the radial direction to introduce hydraulic oil for moving the needle valve 125 in an opening direction (upper direction in Fig. 6) to a lower face (bottom face) 156 of an enlarged diameter portion 155 of the needle valve 125, the lower face being a pressure receiving face; a second communication hole 158 that extends in the radial direction to introduce hydraulic oil pushed out by rising of the enlarged diameter portion 155 when the needle valve 125 is moved in the opening direction, to the outside of the nozzle 122, as well as to introduce hydraulic oil into the recessed portion 151 from the outside of the nozzle 122 when the needle valve 125 is moved in a closing direction (lower direction in Fig. 6); a third communication hole 160 that extends in the radial direction to introduce fuel gas into a chamber (annular space) 159 provided in a portion between the second recessed portion 152 and the third recessed portion 154; a first injection hole 161 that introduces the fuel gas introduced into the chamber 159 and the third recessed portion 154, into the combustion chamber "c" (refer to Fig. 1, etc.), at the time of injecting premixed fuel; and a second injection hole 162 that introduces the fuel gas introduced into the chamber 159 and the third recessed portion 154, into the combustion chamber "c", at the time of injecting diffusion fuel.

The first communication hole 157 is connected to a flow channel switching valve 172 in which a flow channel is switched by an electromagnetic valve 171, through a hydraulic oil pipe 173. The flow channel switching valve 172 is connected to a downstream end of a hydraulic oil supply pipe 174, and an upstream end of a hydraulic oil return pipe 175. The upstream end of the hydraulic oil supply pipe 174 is arranged so as to be positioned inside a hydraulic oil tank 146 as well as close to a bottom face of the hydraulic oil tank 146, and a hydraulic oil pump 147 is connected to the middle of the hydraulic oil supply pipe 174. The downstream end of the hydraulic oil return pipe 175 is arranged so that hydraulic oil returned through the hydraulic oil pipe 173 and the hydraulic oil return pipe 175 is recovered inside the hydraulic oil tank 146.

The third communication hole 160 is connected to a downstream end of a fuel gas supply pipe 176 whose upstream end is connected to a fuel gas supply source (not shown).

The engine control unit 12 (refer to Fig. 1, etc.) transmits a command signal for energizing the electromagnetic valve 171, and a command signal for nonenergizing the electromagnetic valve 171, to an energization device 163. The electromagnetic valve 171 is energized or nonenergized on the basis of the command signals.

The slide valve 123 is a solid cylindrical member that is provided at its one end in the axial direction with a first enlarged diameter portion 131, and is provided in its outer peripheral face of the other end portion with peripheral grooves 182 and 183 along a circumferential direction, in order from an end face 181 that is to be a pressure receiving face of gas (gas inside the cylinder) in the combustion chamber "c". In addition, the peripheral groove 182 and the peripheral groove 183 communicate with each other through a first hole (vertical hole) 184 penetrated along the axial direction through a central portion of the other end portion of the slide valve 123 in the radial direction, and second holes (horizontal holes) 185 penetrated along the radial direction through respective both ends of the first hole 184. Further, a top face of the first enlarged diameter portion 131 serves as a spring receiving face 186 that is brought into contact with a lower end of the slide valve pressing spring 124.

The slide valve pressing spring 124 urges the slide valve 123 in the closing direction.

The needle valve 125 is a hollow cylindrical member in which there is provided along the axial direction a through-hole 191 through which the slide valve 123 is slidably inserted, in its central portion in the radial direction. The second needle valve 25 is provided with a top face (apex face) that serves as a spring receiving face 192 that is brought into contact with the lower end of the needle valve pressing spring 126, and is provided at its other end (tip) with a sealing face (seat face) 194 that is brought into contact with the needle valve seat 193.

The needle valve pressing spring 126 urges the needle valve 125 in the closing direction (urges so that the needle valve seat 193 and the sealing face 194 are brought into contact with each other). Thus, in a state where the hydraulic oil pipe 173 and the hydraulic oil return pipe 175 communicate with each other, that is, in a state where hydraulic pressure of hydraulic oil is not applied to the lower face 156 of the enlarged diameter portion 155 of the needle valve 125, the needle valve 25 is urged in the closing direction.

Next, operation of the fuel gas injection valve 108 will be described with reference to Figs. 6 and 7.

First, as shown in Fig. 6 and the illustration at the first position from the left of the upper half of Fig. 7, in a state where gas pressure (gas pressure inside the cylinder) in the combustion chamber "c" is not applied to the end face 181, and the hydraulic oil pipe 173 and the hydraulic oil return pipe 175 communicate with each other, a lift of each of the slide valve 123 and the needle valve 125 becomes 0 (zero) to close both of the slide valve 123 and the needle valve 125.

Subsequently, the electromagnetic valve 171 shown in Fig. 6 is energized to switch a flow channel of the flow channel switching valve 172 to allow the hydraulic oil pipe 173 and the hydraulic oil supply pipe 174 to communicate with each other. Then, hydraulic oil introduced through the first communication hole 157 is applied to the lower face 156 of the enlarged diameter portion 155 to lift up the needle valve 125 (moves in the opening direction) as shown in the illustration at the second position from the left of the upper half of Fig. 7. As a result, the fuel gas introduced into the chamber 159 through the third communication hole 160 is introduced into the first injection hole 161 through the peripheral groove 183, the second hole 185, the first hole 184, the second hole 185, and the peripheral groove 182, in order, so as to be injected as premixed fuel from the first injection hole 161.

At this time, the second injection hole 162 is closed by an outer peripheral face of the other end portion 153 positioned between the peripheral groove 182 and the peripheral groove 183.

Subsequently, the electromagnetic valve 171 shown in Fig. 6 is nonenergized, so that the flow channel of the flow channel switching valve 172 is switched to allow the hydraulic oil pipe 173 and the hydraulic oil return pipe 175 to communicate with each other, as well as to allow gas pressure (gas pressure inside the cylinder) in the combustion chamber "c" to be applied to the end face 181, as shown in the illustration at the third position from the left of the upper half of Fig. 7, that is, the needle valve 125 is closed, and the slide valve 123 is lifted up (opened).

Next, the electromagnetic valve 171 shown in Fig. 6 is energized to switch a flow channel of the flow channel switching valve 172 to allow the hydraulic oil pipe 173 and the hydraulic oil supply pipe 174 to communicate with each other. Then, hydraulic oil introduced through the first communication hole 157 is applied to the lower face 156 of the enlarged diameter portion 155 of the needle valve 125 to lift up the needle valve 125 (moves in the opening direction) as shown in the illustration at the fourth position from the left of the upper half of Fig. 7. As a result, the fuel gas introduced into the chamber 159 through the third communication hole 160 is introduced into the second injection hole 162 through the peripheral groove 183, the second hole 185, the first hole 184, the second hole 185, and the peripheral groove 182, in order, so as to be injected as premixed fuel from the second injection hole 162.

At this time, the first injection hole 161 is closed by the outer peripheral face of the other end portion 153 positioned between the peripheral groove 182 and the end face 181.

Subsequently, the electromagnetic valve 171 shown in Fig. 6 is nonenergized, so that the flow channel of the flow channel switching valve 172 is switched not to allow the gas pressure (gas pressure inside the cylinder) in the combustion chamber "c" to be applied to the end face 181, as well as to allow the hydraulic oil pipe 173 and the hydraulic oil return pipe 175 to communicate with each other, as shown in Fig. 6 and the illustration at the fifth position from the left of the upper half of Fig. 7, that is, both the slide valve 123 and the needle valve 125 are closed.

The graphs in the lower half of Fig. 7 show a relationship among opening/closing of the slide valve 123, opening/closing of the needle valve 125, pressure inside the cylinder, and a crank angle.

In addition, the illustration at the second position from the left of the upper half of Fig. 7 corresponds to Fig. 3(a), and the illustration at the fourth position from the left of the upper half of Fig. 7 corresponds to Figs. 1 and 3(b).

In accordance with the fuel gas injection valve 108 and the method for injecting fuel gas according to the present embodiment, it is possible to promote premixing of fuel gas and air so that occurrence of NOx (nitrogen oxide) can be reduced.

In accordance with the fuel gas injection valve 108 according to the present embodiment, only applying the pressure inside cylinder to the slide valve 123 allows the slide valve 123 to move to a side opposite to the inside of the cylinder.

Accordingly, it is possible to remove components for moving the slide valve 123 (first needle valve 23) to the side opposite to the inside of the cylinder, such as the first electromagnetic valve 41, the first flow channel switching valve 42, and the first hydraulic oil pipe 43, shown in Fig. 4, so that a configuration can be simplified.

In addition, in accordance with the gas engine 1 provided with the fuel gas injection valve 8 according to the present embodiment, the gas engine includes the fuel gas injection valve 8 capable of promoting premixing of fuel gas and air to reduce occurrence of NOx (nitrogen oxide). As a result, it is possible to reduce NOx (nitrogen oxide) discharged from the gas engine 1 so that performance of the gas engine 1 can be improved.

### (Third embodiment)

Hereinafter, the third embodiment of the fuel gas injection valve according to the present invention will be described with reference to Fig. 8.

Fig. 8 shows a section and a hydraulic system of a fuel gas injection valve according to the third embodiment of the present invention.

As shown in Fig. 8, the fuel gas injection valve 308 according to the present embodiment includes a nozzle holder 321, a nozzle 322, a first needle valve 323, a first needle valve pressing spring 324, a second needle valve 325, and a second needle valve pressing spring 326.

The nozzle holder 321 includes: a recessed portion 332 for slidably accommodating a first enlarged diameter portion 331 provided at one end (apex) of the first needle valve 323 that extends along an axial direction (a vertical direction in Fig. 8), and that reciprocates along the axial direction; a first communication hole 334 that extends in a radial direction (a lateral direction in Fig. 8), and that introduces hydraulic oil that moves the first needle valve 323 in an opening direction (an upper direction in Fig. 8) to a lower face (bottom face) 333 of the first enlarged diameter portion 331, the lower face being a pressure receiving face; and a second communication hole 336 that extends along the radial direction, and that introduces hydraulic oil pushed out by an upper face (top face) 335 of the first enlarged diameter portion 331 when the first needle valve 323 is moved in the opening direction, to the outside of the nozzle holder 321.

The hydraulic oil pushed out by the upper face 335 of the first enlarged diameter portion 331 is leaked through a sliding portion, namely a clearance between an outer peripheral face of the first enlarged diameter portion 331 and an inner peripheral face of the recessed portion 332.

The first communication hole 334 is connected to a first flow channel switching valve 342 in which a flow channel is switched by a first electromagnetic valve 341, through a first hydraulic oil pipe 343. The first flow channel switching valve 342 is connected to a downstream end of a first hydraulic oil supply pipe 344, and an upstream end of a first hydraulic oil return pipe 345. The upstream end of the first hydraulic oil supply pipe 344 is arranged so as to be positioned inside a hydraulic oil tank 346 as well as close to a bottom face of the hydraulic oil tank 346, and a hydraulic oil pump 347 is connected to the middle of the first hydraulic oil supply pipe 344. The downstream end of the first hydraulic oil return pipe 345 is arranged so that hydraulic oil returned through the first hydraulic oil pipe 343 and the first hydraulic oil return pipe 345 is recovered inside the hydraulic oil tank 346.

The nozzle 322 includes: a first recessed portion 351 that extends in the axial direction, and that accommodates the first needle valve pressing spring 324 and the second needle valve pressing spring 326; a second recessed portion 352 that slidably accommodates the first needle valve 323 that reciprocates along the axial direction; a third recessed portion 353 that slidably accommodates the second needle valve 325 that reciprocates along the axial direction; a fourth recessed portion 355 that slidably accommodates a second enlarged diameter portion 354 provided at the other end portion (tip portion) of the first needle valve 323 that reciprocates along the axial direction; a first communication hole 358 that extends in the radial direction to introduce hydraulic oil for moving the second needle valve 325 in the opening direction (upper direction in Fig. 8) to a lower face (bottom face) 357 of an enlarged diameter portion 356 of the second needle valve 325, the lower face being a pressure receiving face; a second communication hole 359 that extends in the radial direction to introduce hydraulic oil pushed out by rising of the enlarged diameter portion 356 when the second needle valve 325 is moved in the opening direction, to the outside of the nozzle 322; a third communication hole 361 that extends in the radial direction to introduce fuel gas into a chamber (annular space) 360 provided in a portion below the third recessed portion 353; a first injection hole 363 that introduces the fuel gas introduced into the chamber 360, the fourth recessed portion 355, and a communication passage 362, into the combustion chamber "c" (refer to Fig. 1, etc.), at the time of injecting premixed fuel; and a second injection hole 364 that introduces the fuel gas introduced into the chamber 360, the fourth recessed portion 355, and the communication passage 362, into the combustion chamber "c", at the time of injecting diffusion fuel.

The first communication hole 358 is connected to a second flow channel switching valve 372 in which a flow channel is switched by a second electromagnetic valve 371, through a second hydraulic oil pipe 373. The second flow channel switching valve 372 is connected to a downstream end of a second hydraulic oil supply pipe 374, and an upstream end of a second hydraulic oil return pipe 375. The upstream end of the second hydraulic oil supply pipe 374 is connected to the middle of the first hydraulic oil supply pipe 344 positioned downstream the hydraulic oil pump 347, and the downstream end of the second hydraulic oil return pipe 375 is connected to the middle of the first hydraulic oil return pipe 345.

The third communication hole 361 is connected to a downstream end of a fuel gas supply pipe 376 whose upstream end is connected to a fuel gas supply source (not shown).

The engine control unit 12 (refer to Fig. 1, etc.) transmits a command signal for energizing the first electromagnetic valve 341 and the second electromagnetic valve 371, and a command signal for nonenergizing the first electromagnetic valve 341 and the second electromagnetic valve 371, to an energization device 377. The first electromagnetic valve 341 and the second electromagnetic valve 371 are energized or nonenergized on the basis of the command signals.

The first needle valve 323 includes the first enlarged diameter portion 331 at one end portion thereof in the axial direction, the second enlarged diameter portion 354 at the other end portion thereof in the axial direction, and a third enlarged diameter portion 381 on a side of the one end from the center thereof in the axial direction. The first needle valve is a solid cylindrical member, and is provided at its other end (tip) with a sealing face (seat face) 383 that is to be brought into contact with a first needle valve seat 382. In addition, a top face of the third enlarged diameter portion 381 serves as a spring receiving face 384 that is brought into contact with a lower end of the first needle valve pressing spring 324. The second enlarged diameter portion 354 is provided with a plurality of through-holes that penetrates through the second enlarged diameter portion 354 along the axial direction, that is, there is provided along the circumferential direction a plurality of communication holes 385 each of which allows top and lower faces of the second enlarged diameter portion 354 to communicate with each other.

The first needle valve pressing spring 324 urges the first needle valve 323 in a closing direction (urges so that the first needle valve seat 382 and the sealing face 383 are brought into contact with each other). Thus, in a state where the first hydraulic oil pipe 343 and the first hydraulic oil return pipe 345 communicate with each other, that is, in a state where hydraulic pressure of hydraulic oil is not applied to the lower face 333 of the first enlarged diameter portion 331, the first needle valve 323 is urged in the closing direction.

The second needle valve 325 is a solid cylindrical member in which a one end portion in the axial direction is formed so as to be fitted to a lower end portion of the second needle valve pressing spring 326. The second needle valve 325 includes a spring receiving face 392 that is provided along a circumferential direction in one end portion thereof, and that is brought into contact with the lower end of the second needle valve pressing spring 326, and a sealing face (seat face) 394 that is provided at the other end (tip) thereof, and that is brought into contact with the second needle valve seat 393.

The second needle valve pressing spring 326 urges the second needle valve 325 in a closing direction (urges so that the second needle valve seat 393 and the sealing face 394 are brought into contact with each other). Thus, in a state where the second hydraulic oil pipe 373 and the second hydraulic oil return pipe 375 communicate with each other, that is, in a state where hydraulic pressure of hydraulic oil is not applied to the lower face 357 of the enlarged diameter portion 356 of the second needle valve 325, the second needle valve 325 is urged in the closing direction.

Next, operation of the fuel gas injection valve 308 will be described.

First, in a state where the first hydraulic oil pipe 343 and the first hydraulic oil return pipe 345 communicate with each other, as well as the second hydraulic oil pipe 373 and the second hydraulic oil return pipe 375 communicate with each other, a lift of each of the first needle valve 323 and the second needle valve 325 becomes 0 (zero) to close both of the first needle valve 323 and the second needle valve 325.

Subsequently, the electromagnetic valve 341 is energized to switch a flow channel of the first flow channel switching valve 342 to allow the first hydraulic oil pipe 343 and the first hydraulic oil supply pipe 344 to communicate with each other. Then, hydraulic oil introduced through the first communication hole 334 is applied to the lower face 333 of the first enlarged diameter portion 331 to lift up the first needle valve 323 (moves in the opening direction). As a result, the outer peripheral face of the second enlarged diameter portion 354 closes the second injection hole 364.

Next, the electromagnetic valve 371 is energized to switch a flow channel of the second flow channel switching valve 372 to allow the second hydraulic oil pipe 373 and the second hydraulic oil supply pipe 374 to communicate with each other. Then, hydraulic oil introduced through the first communication hole 358 is applied to the lower face 357 of the enlarged diameter portion 356 of the second needle valve 325 to lift up the second needle valve 325 (moves in the opening direction). As a result, the fuel gas introduced into the chamber 360 through the third communication hole 361 is introduced into the first injection hole 363 through the communication passage 362 and the communication hole 385 so as to be injected as premixed fuel from the first injection hole 363.

Subsequently, the electromagnetic valve 341 and the electromagnetic valve 371 are nonenergized, so that the flow channel of the first flow channel switching valve 342 and the flow channel of the second flow channel switching valve 372 are switched to allow the first hydraulic oil pipe 343 and the first hydraulic oil return pipe 345 to communicate with each other, as well as to allow the second hydraulic oil pipe 373 and the second hydraulic oil return pipe 375 to communicate with each other, that is, both the first needle valve 323 and the second needle valve 325 are closed.

Next, the electromagnetic valve 371 is energized to switch a flow channel of the second flow channel switching valve 372 to allow the second hydraulic oil pipe 373 and the second hydraulic oil supply pipe 374 to communicate with each other. Then, hydraulic oil introduced through the first communication hole 358 is applied to the lower face 357 of the enlarged diameter portion 356 of the second needle valve 325 to lift up the second needle valve 325 (moves in the opening direction). As a result, the fuel gas introduced into the chamber 360 through the third communication hole 361 is introduced into the second injection hole 364 through the communication passage 362 so as to be injected as diffusion fuel from the second injection hole 364.

At this time, the electromagnetic valve 341 is not energized, so that a lift of the first needle valve 323 becomes 0 (zero) to close the first needle valve 323.

Subsequently, the electromagnetic valve 371 is nonenergized, so that the flow channel of the second flow channel switching valve 372 is switched to allow the second hydraulic oil pipe 373 and the second hydraulic oil return pipe 375 to communicate with each other, that is, both the first needle valve 323 and the second needle valve 325 are closed.

In accordance with the fuel gas injection valve 308 and the method for injecting fuel gas according to the present embodiment, it is possible to promote premixing of fuel gas and air so that occurrence of NOx (nitrogen oxide) can be reduced.

In addition, in accordance with the fuel gas injection valve 308 according to the present embodiment, the first needle valve 323 and the second needle valve 325 are not required to be formed concentrically with each other. As a result, manufacturing processes can be simplified, so that manufacturing cost can be reduced.

Further, in accordance with the gas engine 1 provided with the fuel gas injection valve 308 according to the present embodiment, the gas engine includes the fuel gas injection valve 8 capable of promoting premixing of fuel gas and air to reduce occurrence of NOx (nitrogen oxide). As a result, it is possible to reduce NOx (nitrogen oxide) discharged from the gas engine 1 so that performance of the gas engine 1 can be improved.

### (Fourth embodiment)

Hereinafter, the fourth embodiment of the fuel gas injection valve according to the present invention will be described with reference to Fig. 9.

Fig. 9 shows a section and a hydraulic system of a fuel gas injection valve according to the fourth embodiment of the present invention.

There is a difference between a fuel gas injection valve 208 according to the present embodiment and the fuel gas injection valve according to the first embodiment described above in that the fuel gas injection valve 208 includes a nozzle 222 and a second needle valve 225 instead of the nozzle 22 and the second needle valve 25.

The same member as that of the first embodiment described above is indicated by the same reference numeral, and hereinafter description of the member is omitted.

As shown in Fig. 9, the nozzle 222 according to the present embodiment includes a fourth communication hole 232 that is positioned in a portion between the first communication hole 57 and the third communication hole 60, and that extends along a radial direction to introduce lubricant into an oil reservoir (annular space) 231. The fourth communication hole 232 is connected to a downstream end of a lubricant supply pipe 233 whose upstream end is connected to a lubricant tank (not shown), and a lubricant pump 234 is connected to the middle of the lubricant supply pipe 233.

The second needle valve 225 includes a through-hole 91 provided with an oil reservoir (annular space) 235 that extends in a circumferential direction, and a communication hole 236 that extends along the radial direction to allow the oil reservoir 231 and the oil reservoir 235 to communicate with each other.

In accordance with the fuel gas injection valve 208 according to the present embodiment, it is possible to apply lubricant to a sliding portion so that abrasion and fastening of the sliding portion can be prevented.

In addition, in a state where lubricant with pressure higher than gas pressure of fuel gas is supplied through the lubricant supply pipe 233, the fuel gas is to be sealed in the oil reservoir 231. As a result, blow-by (gas leak) of the fuel gas upward from the oil reservoir 231 can be prevented.

Since other effects are the same as those of the first embodiment described above, hereinafter description of the effects is omitted.

The present invention is not limited to the embodiments described above, but can be appropriately modified or varied if necessary.

For example, the configuration described in the fourth embodiment is also applicable to the second and third embodiments.

In addition, numeric values indicated in, between 40° and 100° before top dead center, about 5° before top dead center, and between 4° before top dead center and 40° after top dead center, described in the first embodiment, are examples for describing the embodiment. Thus, the numeric values can be appropriately changed depending on maximum power of the gas engine 1, and the like.

### {Reference Signs List}

- 1: (dual fuel two-stroke) gas engine
- 4: piston
- 8: fuel gas injection valve
- 22: holder
- 23: first needle valve
- 25: second needle valve
- 61: first injection hole
- 62: second injection hole
- 91: through-hole
- 93: needle valve seat
- 94: sealing face
- 108: fuel gas injection valve
- 122: holder
- 123: slide valve (first needle valve)
- 125: needle valve (second needle valve)
- 161: first injection hole
- 162: second injection hole
- 191: through-hole
- 193: needle valve seat
- 194: sealing face
- 208: fuel gas injection valve
- 222: holder
- 225: second needle valve
- 231: oil reservoir
- 235: oil reservoir
- 236: communication hole

### {FURTHER EMBODIMENTS}

{1} A fuel gas injection valve applicable to a dual fuel gas engine capable of burning both fuel oil and fuel gas by using high-pressure injection, the fuel gas injection valve comprising:
   a holder including a first injection hole through which fuel gas is injected to produce premixed fuel when a piston included in the dual fuel gas engine is positioned between 40° and 100° before top dead center, and a second injection hole through which fuel gas is injected to produce diffusion fuel when the piston is positioned between 10° before the top dead center and 15° after the top dead center;
   a first needle valve that slidably reciprocates along an axial direction in the holder to close the second injection hole when the first injection hole is opened, and to open the second injection hole when the first injection hole is closed; and
   a second needle valve having a sealing face on the top thereof and a through-hole provided along the axial direction at the central portion in a radial direction of the second needle valve, the sealing face being brought into contact with a needle valve seat provided in the holder, the first needle valve being slidably inserted into the through-hole, and the second needle valve reciprocating in the holder along the axial direction to prevent fuel gas from circulating to the first injection hole and the second injection hole when the sealing face is in contact with the needle valve seat, and to allow the fuel gas to circulate to the first injection hole or the second injection hole when the sealing face is separated from the needle valve seat.
{2} The fuel gas injection valve according to 1, wherein the first needle valve serves as a slide valve that is reciprocated in the holder along the axial direction by pressure inside cylinder of the dual fuel gas engine.
{3} The fuel gas injection valve according to 1 or 2, wherein the nozzle includes oil reservoirs provided in a portion in which the second needle valve slides and in the through-hole, respectively, and the oil reservoir provided in the portion in which the second needle valve slides and the oil reservoir provided in the through-hole communicate with each other through a communication hole provided in the nozzle along a radial direction thereof.
{4} A fuel gas injection valve applicable to a dual fuel gas engine capable of burning both fuel oil and fuel gas by using high-pressure injection, the fuel gas injection valve comprising:
   a holder including a first injection hole through which fuel gas is injected to produce premixed fuel when a piston included in the dual fuel gas engine is positioned between 40° and 100° before top dead center, and a second injection hole through which fuel gas is injected to produce diffusion fuel when the piston is positioned between 10° before the top dead center and 15° after the top dead center;
   a first needle valve that slidably reciprocates along an axial direction in the holder to close the second injection hole when the first injection hole is opened, and to open the second injection hole when the first injection hole is closed; and
   a second needle valve having a sealing face on the top thereof, the sealing face being brought into contact with a needle valve seat provided in the holder, and the second needle valve reciprocating in the holder along the axial direction to prevent fuel gas from circulating to the first injection hole and the second injection hole when the sealing face is in contact with the needle valve seat, and to allow the fuel gas to circulate to the first injection hole or the second injection hole when the sealing face is separated from the needle valve seat.
{5} The fuel gas injection valve according to 4, wherein the nozzle includes oil reservoirs provided in a portion in which the first needle valve slides and a portion in which the second needle valve slides, respectively.
{6} A dual fuel gas engine comprising the fuel gas injection valve according to any one of 1 to 5.
{7} A method for injecting fuel gas, applicable to a dual fuel gas engine capable of burning both fuel oil and fuel gas by using high-pressure injection, the method comprising the steps of:
   injecting fuel gas to produce premixed fuel when a piston included in the dual fuel gas engine is positioned between 40° and 100° before top dead center; and
   injecting fuel gas to produce diffusion fuel when the piston is positioned between 10° before the top dead center and 15° after the top dead center.

## Claims

1. A fuel gas injection valve applicable to a dual fuel gas engine capable of burning both fuel oil and fuel gas by using high-pressure injection, the fuel gas injection valve comprising:
a nozzle including a first injection hole through which fuel gas is injected to produce premixed fuel and a second injection hole through which fuel gas is injected to produce diffusion fuel;
a first needle valve that slidably reciprocates along an axial direction in the nozzle to close the second injection hole when the first injection hole is opened, and to open the second injection hole when the first injection hole is closed; and
a second needle valve having a sealing face on the tip thereof and a through-hole provided along the axial direction at the central portion in a radial direction of the second needle valve, the sealing face being brought into contact with a needle valve seat provided in the nozzle , the first needle valve being slidably inserted into the through-hole, and the second needle valve reciprocating in the nozzle along the axial direction to prevent fuel gas from circulating to the first injection hole and the second injection hole when the sealing face is in contact with the needle valve seat, and to allow the fuel gas to circulate to the first injection hole or the second injection hole when the sealing face is separated from the needle valve seat, wherein
the nozzle includes oil reservoirs provided in a portion in which the second needle valve slides and in the through-hole, respectively, and the oil reservoir provided in the portion in which the second needle valve slides and the oil reservoir provided in the through-hole communicate with each other through a communication hole provided in the nozzle along a radial direction thereof.

2. The fuel gas injection valve according to Claim 1, wherein the first needle valve serves as a slide valve that is reciprocated in the nozzle along the axial direction by pressure inside cylinder of the dual fuel gas engine.

3. The fuel gas injection valve according to Claim 1 or 2, wherein the nozzle includes oil reservoirs provided in a portion in which the first needle valve slides and a portion in which the second needle valve slides, respectively.
